# EUROPÄISCHE PATENTANMELDUNG

(11) **EP 1 860 861 A1**
(43) Veröffentlichungstag der Anmeldung: **28.11.2007**
(21) Anmeldenummer: 07001309.9
(22) Anmeldetag: 22.01.2007
(51) Int. Cl.: H04M 3/436

(54) **Verfahren zum Herstellen einer Telefonverbindung**

(30) Priorität: 24.05.2006 DE 102006024417
(71) Anmelder: mconnect AG, 60596 Frankfurt/Main (DE)
(72) Erfinder: Jost, Karlheinz, 61381 Friedrichsdorf (DE)
(74) Vertreter: Leinweber & Zimmermann

(57) **Zusammenfassung**

Die Erfindung betrifft ein Verfahren zum Herstellen einer Telefonverbindung zu einem Mobilfunkteilnehmer, bei dem ein anrufender Teilnehmer den anzurufenden Mobilfunkteilnehmer identifizierende Informationen an einen Dienstanbieter weiterleitet, wobei der anzurufende Teilnehmer von dem Dienstanbieter über den Verbindungswunsch des anrufenden Teilnehmers informiert wird und vorzugsweise, ansprechend auf eine zustimmende Mitteilung des anzurufenden Mobilfunkteilnehmers an den Dienstanbieter, die Herstellung der gewünschten Telefonverbindung ermöglicht wird.

## Beschreibung

Die Erfindung betrifft ein Verfahren zum Herstellen einer Telefonverbindung zu einem Mobilfunkteilnehmer, bei dem ein anrufender Teilnehmer den anzurufenden Mobilfunkteilnehmer identifizierende Informationen an einen Dienstanbieter weiterleitet.

Mit der zunehmenden Verfügbarkeit von Mobilfunknetzen wird eine deutliche Abnahme der Festnetztelefonie beobachtet. Es gibt bereits viele Mobilfunkteilnehmer, die vollständig auf einen Festnetz-Telefonanschluß verzichten. lm Hinblick auf die unter Verwendung von Mobilfunknetzen sichergestellte dauernde Erreichbarkeit von Mobilfunkteilnehmern wird oft davon Abstand genommen, Mobilfunknummern in öffentlichen Telefonbüchern oder über Auskunftsdienste bekannt zu machen. Die Zuordnung der Mobilfunknummern zu den Mobilfunkteilnehmern ist dann nur noch in einer zentralen Datenbank des Mobilfunkbetreibers zum Zweck der Rechnungsstellung und im Hinblick auf gesetzliche Vorschriften sichergestellt.

Diese oft zum Schutz vor telefonischen Belästigungen von dem Mobilfunkteilnehmer getroffenen Maßnahmen führen allerdings zu dem Ergebnis, daß auch gewünschte Telefonverbindungen zu dem Mobilfunkteilnehmer von einem anrufenden Teilnehmer mangels Kenntnis der Mobilfunknummer nicht hergestellt werden können.

Angesichts dieser Probleme im Stand der Technik liegt der Erfindung die Aufgabe zugrunde, ein Verfahren zum Herstellen einer Telefonverbindung bereitzustellen, mit dem unter Vermeidung einer unerwünschten Belästigung von Mobilfunkteilnehmern die Herstellung gewünschter Telefonverbindungen ermöglicht wird.

Erfindungsgemäß wird diese Aufgabe durch eine Weiterbildung der bekannten Verfahren der eingangs beschriebenen Art gelöst, die im wesentlichen dadurch gekennzeichnet ist, daß der anzurufende Teilnehmer von dem Dienstanbieter über den Verbindungswunsch des anrufenden Teilnehmers informiert wird und vorzugsweise ansprechend auf eine zustimmende Mitteilung des anzurufenden Mobilfunkteilnehmers an den Dienstanbieter die Herstellung der gewünschten Telefonverbindung ermöglicht wird.

Die erfindungsgemäße Lösung der im Stand der Technik auftretenden Probleme geht auf die Erkenntnis zurück, daß die vorhandenen Informationen zur Zuordnung von Mobilfunkteilnehmer identifizierenden Informationen zu Mobilfunknummern auch ohne Bereitstellung dieser Informationen für die Allgemeinheit zur Herstellung gewünschter Telefonverbindungen genutzt werden können, wenn diese Telefonverbindung nicht unmittelbar durch den anrufenden Teilnehmer, sondern durch einen neutralen Dienstanbieter ohne Preisgabe vertraulicher Informationen an den anrufenden Teilnehmer hergestellt bzw. angebahnt wird. Auf diese Weise kann eine ggf. gewünschte Anonymität der Mobilfunkteilnehmer ohne weiteres gewahrt werden.

Im Rahmen erfindungsgemäßer Verfahren kann der anrufende Teilnehmer die den anzurufenden Mobilfunkteilnehmer identifizierenden Informationen, wie etwa dessen Namen, beispielsweise telefonisch an den Dienstanbieter weiterleiten. Bei einer bevorzugten Ausführungsform der Erfindung ist allerdings daran gedacht, die den anzurufenden Mobilfunkteilnehmer identifizierenden Informationen als SMS an den Dienstanbieter weiterzuleiten. In beiden Fällen können die den anzurufenden Teilnehmer identifizierenden Informationen ggf. unter Verwendung geeigneter Spracherkennungsprogramme zur Ermittlung einer Mobilfunknummer des anzurufenden Mobilfunkteilnehmers unter Rückgriff auf eine Mobilfunknummern von Mobilfunkteilnehmern und die Mobilfunkteilnehmer identifizierende Informationen enthaltende Datenbank mit Hilfe einer Datenverarbeitungsanlage des Dienstanbieters automatisch ausgewertet werden. Auf diese Weise wird sichergestellt, daß auch die vom Dienstanbieter bereitgestellten Dienstleistungen unter vollständiger Wahrung der Anonymität des anzurufenden Mobilfunkteilnehmers bereitgestellt werden, weil es bei einer automatischen Auswertung der den anzurufenden Mobilfunkteilnehmer identifizierenden Informationen nicht mehr notwendig ist, daß ein Mitarbeiter des Dienstanbieters die Mobilfunknummer des anzurufenden Mobilfunkteilnehmers erfährt.

Im Rahmen der Erfindung hat es sich weiter als besonders günstig erwiesen, wenn der anzurufende Mobilfunkteilnehmer mit Hilfe einer vorzugsweise automatisch von der Datenverarbeitungsanlage erzeugten SMS über den Verbindungswunsch informiert wird, weil durch den Empfang einer SMS nur eine geringfügige Störung des anzurufenden Mobilfunkteilnehmers verursacht wird. Dabei kann die den anzurufenden Mobilfunkteilnehmer informierende SMS beispielsweise die Rufnummer und/oder den Namen des den Verbindungswunsch äußernden anrufenden Teilnehmers enthalten.

Bei einer besonders bevorzugten Ausführungsform der Erfindung wird eine zustimmende Mitteilung des anzurufenden Mobilfunkteilnehmers automatisch, beispielsweise als SMS, an den anrufenden Teilnehmer weitergeleitet und/oder, ansprechend auf die zustimmende Mitteilung von dem Dienstanbieter, automatisch eine Telefonverbindung zwischen dem anrufenden Teilnehmer und dem anzurufenden Teilnehmer hergestellt. Der anzurufende Mobilfunkteilnehmer kann seine Bereitschaft zur Herstellung einer Telefonverbindung zu dem anrufenden Teilnehmer beispielsweise mit Hilfe einer SMS mitteilen. Zusätzlich oder alternativ kann der anzurufende Teilnehmer auch den Dienstanbieter anrufen und sich (anonym) mit dem anrufenden Teilnehmer verbinden lassen. In den beschriebenen Fällen kommt die gewünschte Telefonverbindung zustande.

Als besonders günstig hat es sich erwiesen, wenn der anrufende Teilnehmer über die Bereitschaft zur Herstellung einer Telefonverbindung des anzurufenden Teilnehmers per SMS informiert wird, wenn der anzurufende Teilnehmer bei einem ersten Verbindungsversuch des Dienstanbieters nicht erreichbar ist. Dann kann die Bereitschaft des anzurufenden Teilnehmers zur Herstellung einer Verbindung auch bei fehlender Tarifumkehr in dem Molbilfunknetz mitgeteilt werden. Das ist im besonderen dann von Nutzen, wenn der Mobilfunkbetreiber eine R-Gesprächslogik nicht bereitstellt, um so den anzurufenden Teilnehmer von den Verbindungskosten zu entlasten.

Im Rahmen der Erfindung hat es sich zur Vermeidung unerwünschter Belästigungen des anzurufenden Mobilfunkteilnehmers als besonders günstig erwiesen, wenn der anrufende Teilnehmer von dem Dienstanbieter automatisch über eine fehlende Zustimmung des anzurufenden Teilnehmers informiert wird, falls von diesem innerhalb einer vorgegebenen Zeit keine zustimmende Mitteilung bei dem Dienstanbieter eingeht. Bei dieser Ausführungsform der Erfindung sind keinerlei Aktionen des anzurufenden Mobilfunkteilnehmers erforderlich, falls dieser der Herstellung der gewünschten Telefonverbindung nicht zustimmen will. Zur Vermeidung einer unerwünschten Ansammlung von Verbindungswünsche darstellenden Informationen bei dem Dienstanbieter werden diese Informationen zweckmäßigerweise automatisch gelöscht, wenn der anzurufende Mobilfunkteilnehmer innerhalb der vorgegebenen Zeit nicht reagiert.

Bei einer besonders bevorzugten Ausführungsform der Erfindung hat der Dienstanbieter unmittelbaren Zugriff auf eine Mobilfunknummern und Mobilfunkteilnehmer identifizierende Informationen enthaltende Datenbank. Allerdings ist im Rahmen der Erfindung auch an solche Verfahren gedacht, bei denen der Zugang auf eine derartige Datenbank durch den Dienstanbieter selbst nicht erforderlich ist. Dann kann der Dienstanbieter über einen Schlüssel mit dem System des Mobilfunkbetreibers zusammenarbeiten. Das würde allerdings erforderlich machen, daß der Informationsaustausch per SMS oder Telefonanrufen auch auf diesem sehr aufwendigen Weg ausgeführt wird.

## Patentansprüche

1. Verfahren zum Herstellen einer Telefonverbindung zu einem Mobilfunkteilnehmer, bei dem ein anrufender Teilnehmer den anzurufenden Mobilfunkteilnehmer identifizierende Informationen an einen Dienstanbieter weiterleitet, **dadurch gekennzeichnet, daß** der anzurufende Teilnehmer von dem Dienstanbieter über den Verbindungswunsch des anrufenden Teilnehmers informiert wird und vorzugsweise, ansprechend auf eine zustimmende Mitteilung des anzurufenden Mobilfunkteilnehmers an den Dienstanbieter, die Herstellung der gewünschten Telefonverbindung ermöglicht wird.

2. Verfahren nach Anspruch 1, **dadurch gekennzeichnet, daß** die den anzurufenden Mobilfunkteilnehmer identifizierenden Informationen mit Hilfe einer SMS an den Dienstanbieter weitergeleitet werden.

3. Verfahren nach Anspruch 1 oder 2, **dadurch gekennzeichnet, daß** die den anzurufenden Teilnehmer identifizierenden Informationen zur Ermittlung einer Mobilfunknummer des anzurufenden Mobilfunkteilnehmers unter Rückgriff auf eine Mobilfunknummern von Mobilfunkteilnehmern und die Mobilfunkteilnehmer identifizierende Informationen enthaltende Datenbank mit Hilfe einer Datenverarbeitungsanlage automatisch ausgewertet werden.

4. Verfahren nach einem der vorhergehenden Ansprüche, **dadurch gekennzeichnet, daß** der anzurufende Teilnehmer mit Hilfe einer vorzugsweise automatisch von der Datenverarbeitungsanlage erzeugten SMS über den Verbindungswunsch des anrufenden Teilnehmers informiert wird.

5. Verfahren nach einem der vorhergehenden Ansprüche, **dadurch gekennzeichnet, daß** die zustimmende Mitteilung automatisch an den anrufenden Teilnehmer weitergeleitet wird.

6. Verfahren nach einem der vorhergehenden Ansprüche, **dadurch gekennzeichnet, daß**, ansprechend auf die zustimmende Mitteilung von dem Dienstanbieter, automatisch eine Telefonverbindung zwischen dem anrufenden Teilnehmer und dem anzurufenden Teilnehmer hergestellt wird.

7. Verfahren nach einem der vorhergehenden Ansprüche, **dadurch gekennzeichnet, daß** der anrufende Teilnehmer von dem Dienstanbieter automatisch über eine fehlende Zustimmung des anzurufenden Teilnehmers informiert wird, falls von diesem innerhalb einer vorgegebenen Zeit keine zustimmende Mitteilung bei dem Dienstanbieter eingeht.
